# DEMANDE DE BREVET EUROPEEN

(11) **EP 2 343 663 A1**
(43) Date de publication de la demande: **13.07.2011**
(21) Numéro de dépôt: 09306257.8
(22) Date de dépôt: 17.12.2009
(51) Int. Cl.: G06F 21/00

(54) **Procédé de protection polymorphe d'un code exécutable**

(71) Demandeur: Gemalto SA, 92190 Meudon (FR)
(72) Inventeur: Loubet-Moundi, Philippe, 13600 La Ciotat (FR)

(57) **Abrégé**

L'invention concerne dans son acception la plus générale un procédé de sécurisation de l'exécution d'un code informatique, ce code informatique étant divisible en commandes, et au moins une de ces commandes, dite « commande sensible », comporte au moins une contremesure logicielle destinée à détecter un déroulement anormal de son exécution, la contremesure nécessitant une écriture dans une mémoire non volatile. Le procédé comprend au moins les étapes de :
- tirage d'une valeur aléatoire
- en fonction de ladite valeur aléatoire :
- insertion, d'un leurre après ladite contre mesure, décalage ultérieur de ladite écriture en mémoire dans une mémoire non volatile.

## Description

La présente invention se rapporte au domaine de la détection de fautes dans un composant électronique.

La présente invention concerne plus particulièrement un procédé permettant la détection de fautes successives visant à attaquer une opération sensible, ainsi que les éventuels moyens mis en oeuvre pour la protéger.

La carte à puce, et de manière plus générale, certains composants électroniques portables, sont bien souvent utilisés comme unité de calcul et de stockage de données secrètes et/ou sensibles dans le but de sécuriser une application. L'identité, la téléphonie mobile, le payement, le transport ou encore le contrôle d'accès sont autant de domaines d'applications dans lesquels la carte à puce joue un rôle essentiel.

Ce rôle consiste, entre autres et de manière non limitative, à une authentification du porteur de la carte et/ou de l'émetteur de la carte. La carte peut également contenir des « unités » qui peuvent correspondre à des points de fidélité, de l'argent (par exemple les unités téléphoniques) ou encore des tickets de métro selon l'application.

La carte représente ainsi, pour certains individus et organisations malveillants, une cible de prédilection afin de frauder ou de porter atteinte à l'image de marque d'une société.

La carte fait face depuis son déploiement à des menaces dont l'observation de la consommation de courant (Differential Power Analysis) mais également depuis peu aux attaques par injection de fautes transitoires. La détection de telles attaques est relativement complexe et la réponse à ces attaques difficile à mettre en oeuvre. Les composants électroniques actuels ne sont pas capables de garantir un fonctionnement correct quelles que soient les perturbations externes. Il en résulte que le logiciel ou système d'exploitation embarqué dans la carte doit se prémunir par lui-même de défaillances éventuelles du composant engendrées par une injection de faute sous peine de corruption de données sensibles.

L'art antérieur connaît déjà des solutions pour la détection de perturbations, par exemple des glitchs (impulsion de tension) qui seraient susceptibles d'entraîner une faute dans le fonctionnement du composant électronique. Notons l'existence de solutions matérielles qui consistent à intégrer des capteurs environnementaux (de température, de fréquence horloge, de tension d'alimentation, de lumière) qui vont détecter une perturbation (une tension anormalement basse, une intensité lumineuse trop forte) afin de réagir avant de rentrer dans une zone de fonctionnement du composant jugée instable et donc à risques en terme de faute. Ces solutions sont coûteuses car nécessitent le développement de capteurs spécifiques (coût économique) et l'intégration de ceux-ci dans des circuits parfois de petite taille (coût de taille).

On connaît également des solutions qui détectent l'effet de la perturbation subie, par exemple par la présence d'un bit de données modifié.

On distingue, entre autres, des solutions logicielles ou matérielles de type redondance d'un processus. La redondance consiste de manière simpliste à effectuer deux fois la même opération (calcul, transmission, ...) afin de comparer le résultat des deux actions. En mode logiciel, la redondance peut être un double calcul sur des données. En mode matériel, cette redondance peut se manifester pas la présence, par exemple, de deux registres dédoublés stockant a priori les mêmes valeurs. Si les résultats sont différents, alors il peut être raisonnablement conclu que l'une des actions s'est mal passée sûrement suite à une perturbation (faute).

Egalement, il existe des solutions logicielles ou matérielles de type contrôle d'intégrité. Une donnée stockée en mémoire non volatile se voit ajoutée un « checksum » (somme de contrôle) de la donnée, cette somme permettant de détecter si la donnée est corrompue par une faute avant la vérification du checksum en cas d'incohérence entre la donnée et la somme checksum. L'ajout de données d'intégrité est répandu dans les couches logicielles, par exemple pour la transmission de données. Le checksum en hardware (matériel) tel qu'on le trouve dans l'art antérieur est mis en oeuvre uniquement au niveau d'un bloc mémoire, il prend bien souvent le nom de « bit de parité ». Le mot machine élémentaire (8 bits sur un composant 8-bit) est stocké sur 9 bits en mémoire, le 9ième bit étant un bit de parité positionné de sorte que la parité du mot soit systématiquement pair/impair. Lors d'une lecture, la parité est vérifiée et le mot de 8 bits est positionné sur le bus de données. Lors d'une écriture, le mot de 8 bits positionné sur le bus de données est écrit en mémoire et le bit de parité est généré dans le même temps. Le problème est que sur le bus de données, le mot transmit ne comprend pas de données d'intégrité : il n'y a aucun moyen de vérifier que cette valeur, une fois transférée vers la mémoire, l'unité centrale de traitement CPU ou le cache, est encore correcte.

Ces solutions sont suffisantes pour des fautes « accidentelles » qui surviennent pendant l'exécution d'une commande, par exemple dans le domaine spatial, les fautes étant ponctuelles (impulsions) et affectant soit la donnée (ou processus sensible) soit sa redondance ou son checksum. Notons que tout processus décisionnel ou de manipulation de donnée sensible ou de calcul cryptographique peut être considéré comme sensible. A titre d'exemple, et ce de manière non limitatif, on citera, le processus décisionnel de choix d'acceptation d'une commande ou encore de choix d'acceptation une opération de lecture/écriture/effacement d'un fichier ou encore le choix d'acceptation d'un débit ou d'un crédit sur une balance électronique ou encore de comparaison d'un code secret ou d'un MAC (Message Authentication Code).

Cependant, des personnes mal intentionnées peuvent répéter des fautes sur les composants électroniques et adapter leurs techniques jusqu'au succès. Ainsi il est envisageable que le pirate tente de reproduire la même faute à la fois sur le processus sensible et sur le processus redondant afin que la faute ne soit pas détectée.

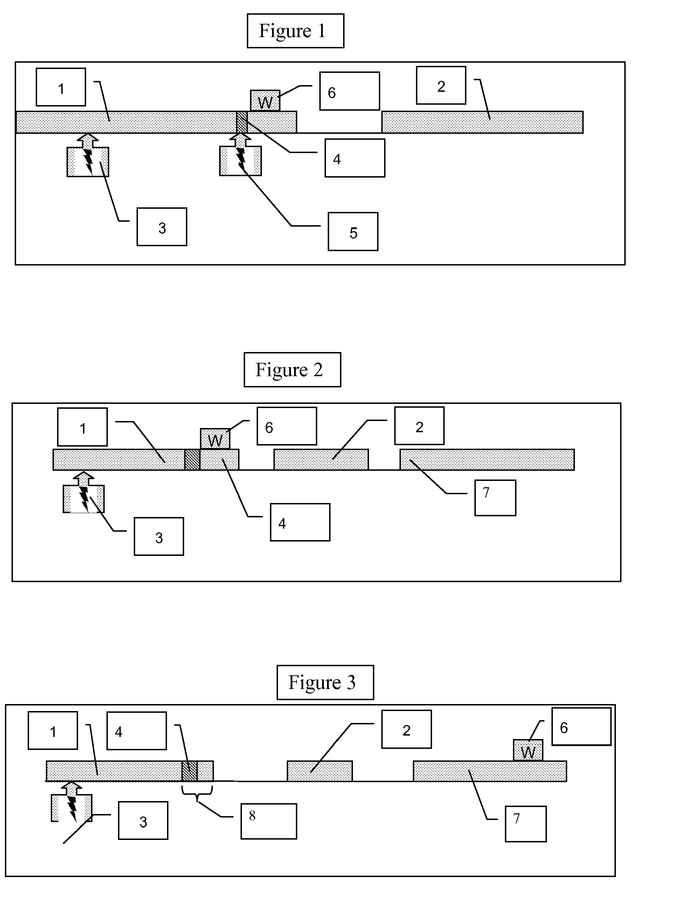

L'art antérieur connaît alors une solution consistant à insérer, comme illustré par la figure 1, un délai aléatoire entre un processus sensible et sa redondance. Cette solution accroît de façon importante la résistance de la protection contre les fautes.

Cependant toutes ces contremesures, comme n'importe quel code informatique exécutable, peuvent être observées par une personne mal intentionnée. Ces contremesures étant, par essence positionnées à proximité des opérations sensibles, leur détection peut dévoiler des informations critiques.

Ainsi de nouvelles attaques ont été mise au point par des personnes mal intentionnées : la combinaison de faute. Cette catégorie d'attaques consiste en un enchainement d'au moins deux fautes consécutives, une sur les opérations sensibles, et l'autre sur la contremesure sensée les protéger. Il devient ainsi possible de perturber le fonctionnement des opérations sensibles, et d'empêcher les contremesures de détecter un tel acte. L'attaque sur les contremesures se fait généralement sur l'opération d'écriture qui consiste en l'inscription dans une mémoire, de la détection de la faute. Ainsi, la personne menant l'attaque détecte la contremesure, et provoque une faute afin d'empêcher cette écriture.

De façon générale, les solutions de l'art antérieur ne permettent pas de faire face de façon efficace à des perturbations consécutives pouvant affecter à la fois les processus sensibles et les contremesures associées.

La présente invention entend remédier aux inconvénients de l'art antérieur en proposant un procédé de détection de fautes dans lequel l'inscription en mémoire qui prend acte de la détection est déplacée ultérieurement dans l'exécution du programme.

Le procédé selon la présente invention répond particulièrement bien à la protection contre les perturbations consécutives puisque il est très difficile à la personne malveillante qui procédé aux fautes, de localiser la prise en compte de la détection de sa faute, et ainsi de tenter de l'éradiquer.

A cet effet, l'invention concerne dans son acception la plus générale un procédé de sécurisation de l'exécution d'un code informatique, ce code informatique étant divisible en commandes, et au moins une de ces commandes, dite « commande sensible », comporte au moins une contremesure logicielle destinée à détecter un déroulement anormal de son exécution, la contremesure nécessitant une écriture dans une mémoire non volatile. Le procédé comprend au moins les étapes de :
- tirage d'une valeur aléatoire
- en fonction de ladite valeur aléatoire :
- insertion, d'un leurre après ladite contre mesure,
- décalage ultérieur de ladite écriture en mémoire dans une mémoire non volatile.

Dans une étape préalable, au moins une commande de vérification, dite « checking » peut être ajoutée au code informatique.

Cette commande de vérification, dite « checking » peut être insérée, après la contremesure, par exemple dans la « commande sensible », ou bien dans au moins une des commandes qui succèdent à ladite commande sensible.

La commande de vérification, dite « checking » peut être insérée un nombre aléatoire de fois, supérieur à zéro, dans le code exécutable.

La commande de vérification, dite « checking » peut être insérée à un endroit aléatoire du code exécutable, suivant la contremesure.

Selon un mode de réalisation, la commande « checking » peut consister en une analyse d'une zone prédéterminée de la mémoire volatile, et, en fonction de la valeur de cette zone mémoire, effectuer une écriture en mémoire. Ce « checking » peut prendre en considération ladite valeur aléatoire.

Selon le mode d'implémentation, le leurre peut être par exemple composé d'au moins une opération ayant une signature identique à celle d'une écriture dans une mémoire non volatile. Dans un autre mode d'implémentation, le leurre peut être par exemple composé d'au moins une opération ayant une signature identique à celle d'une écriture avortée, dans une mémoire non volatile.

Le décalage peut consister en l'écriture, dans une mémoire volatile, d'au moins une valeur, liée à la contremesure.

D'autres caractéristiques et avantages de l'invention ressortiront clairement de la description qui en est faite ci-après, à titre indicatif et nullement limitatif, en référence aux dessins annexés dans lesquels :
- La figure 1 représente une contremesure selon l'art antérieur, ainsi que les actions malicieuses qui peuvent être menées contre elle.
- La figure 2 représente une implémentation de l'invention dans laquelle l'écriture en mémoire qui prend acte du résultat de la contremesure est remplacée par une opération d'écriture aléatoire
- La figure 3 représente une implémentation de l'invention dans laquelle la contremesure reporte l'écriture en mémoire qui prend acte de son éventuelle détection d'une faute, vers une commande ultérieure.

La figure 1 schématise une portion d'un code informatique. Dans ce code, deux commandes sont identifiées, la commande 1 et la commande 2. La commande 1 est considérée comme sensible selon l'invention. Elle va donc être susceptible d'attaque de la part d'une personne malveillante. Ainsi la commande 1 comporte au moins un moyen de contremesure 4 destiné à vérifier le bon déroulement de la commande 1. Ce moyen 4 est suivi d'une écriture mémoire 6. Cette écriture mémoire 6 peut par exemple consister en l'enregistrement du résultat de la vérification faite par le moyen 4.

L'attaque menée par la personne malveillante est illustrée par le pictogramme 3. Dans la présente illustration, cette attaque sera illustrée par une attaque par faute. Toutefois, toute action volontaire destinée à perturber l'exécution normale de la commande 1 est transposable dans la présente description.

Cette attaque peut par exemple consister en la modification non autorisée d'une donnée en mémoire.

Si l'attaquant veut que son attaque soit couronnée de succès, il doit trouver un moyen pour éviter sa détection. Une analyse poussée de l'exécution de la commande 1, peut permettre de localiser la contremesure 4. En effet, pour vérifier le bon déroulement de la commande 1, le moyen 4 doit effectuer des opérations potentiellement reconnaissables.

En localisant cette contremesure 4, il est possible à l'attaquant de générer une nouvelle attaque 5, dont le but est d'empêcher l'écriture 6 de se réaliser. Ainsi le résultat de la contremesure 4 ne sera pas enregistré, et donc il ne sera pas possible de réagir suite à l'attaque 3.

La figure 2 représente le même schéma que celui de la figure 1, mais dans lequel est illustrée une commande 7, non sensible, et ultérieure à la commande sensible 1. La figure 3 représente le schéma de la figure 2 dans lequel la présente invention est implémentée.

Cette implémentation permet, dans un premier temps de décaler l'écriture 9 après la contremesure 4, et notamment dans une commande postérieure à la commande 1. Dans la figure 3, cette écriture est reportée dans une commande 7, postérieure et non sensible.

En lieu et place de l'écriture 6, avant implémentation de l'invention, consécutivement à la contremesure 4, le procédé selon l'invention génère une portion de commande 8 qui peut avantageusement avoir la même « signature » que celle qu'aurait donné la fin de la commande 1 dans la figure 1 si l'attaque 5 avait réussi.

Il est ainsi impossible à l'attaquant de savoir si son attaque 3 à été détectée, et quand est ce que cette détection potentielle sera prise en compte.

Dans un mode préféré d'implémentation de l'invention, le report de l'écriture 9 se fait de manière aléatoire, par exemple en prenant en compte les résultats intermédiaires de la contremesure 4.

Une implémentation possible consiste en la localisation, lors de l'écriture du code, de différentes positions possibles pour reporter l'écriture 9, et le choix de la position effective se fait lors l'exécution de la contremesure 4.

Un code comporte généralement plusieurs commandes sensibles, et chacune peut contenir plusieurs contremesures. Ainsi l'invention peut avantageusement se trouver multipliée d'autant.

Dans le cas d'une pluralité de contremesures, un mode d'implémentation peut consister en une détection dite générale d'attaque, ou bien une détection sélective.

Dans le cas d'une détection générale, chaque contremesure 4 peut déclencher une écriture 9, et chaque écriture 9 va enregistrer une détection sans relation spécifique avec la contremesure 4 qui l'a affectivement détectée. Ce mode d'implémentation offre une grande réactivité.

Dans le cas d'une détection sélective, chaque contremesure 4 peut déclencher une écriture 9, mais chaque écriture 9 ne prend en compte que l'ordre d'écriture émit par la contremesure 4 qui l'a effectivement déclenchée. Ce mode d'implémentation offre une grande précision car chaque écriture 9 peut contenir des informations fournies par la contremesure 4 correspondante, et donc adapter au plus près la réaction à prendre à cette détection. En revanche, chaque contremesure n'étant prise en compte que par une écriture, cette solution est moins réactive.

## Revendications

1. Procédé de sécurisation de l'exécution d'un code informatique, ledit code informatique étant divisible en commandes (1, 2, 7), et au moins une de ces commandes (1), dite « commande sensible », comporte au moins une contremesure logicielle (4) destinée à détecter un déroulement anormal de son exécution, ladite contremesure nécessitant une écriture (6) dans une mémoire non volatile, **caractérisé en ce que** le procédé comprend au moins les étapes de :
- tirage d'une valeur aléatoire
- en fonction de ladite valeur aléatoire :
- insertion, d'un leurre (8) après ladite contre mesure (4),
- décalage ultérieur de ladite écriture (6) en mémoire dans une mémoire non volatile.

2. Procédé de sécurisation de l'exécution d'un code informatique selon la revendication 1, **caractérisé en ce que**, dans une étape préalable, au moins une commande de vérification, dite « checking » à été ajoutée audit code informatique.

3. Procédé de sécurisation de l'exécution d'un code informatique selon la revendication 2, **caractérisé en ce que**, ladite commande de vérification, dite « checking » est insérée, après ladite contremesure (4), dans ladite « commande sensible » (1).

4. Procédé de sécurisation de l'exécution d'un code informatique selon la revendication 2, **caractérisé en ce que**, ladite commande de vérification, dite « checking » est insérée, dans au moins une des commandes (2, 7) qui succèdent à ladite commande sensible (1).

5. Procédé de sécurisation de l'exécution d'un code informatique selon l'une quelconque des revendications 3 à 4, **caractérisé en ce que**, ladite commande de vérification, dite « checking » est insérée un nombre aléatoire de fois, supérieur à zéro, dans ledit code exécutable.

6. Procédé de sécurisation de l'exécution d'un code informatique selon l'une quelconque des revendications 3 à 4, **caractérisé en ce que**, ladite commande de vérification, dite « checking » est insérée à un endroit aléatoire dudit code exécutable, suivant ladite contremesure (4) .

7. Procédé de sécurisation de l'exécution d'un code informatique selon l'une quelconque des revendications 1 à 6, **caractérisé en ce que**, ledit « checking » consiste en une analyse d'une zone prédéterminée de la mémoire volatile, et, en fonction de la valeur de cette zone mémoire, effectuer une écriture en mémoire.

8. Procédé de sécurisation de l'exécution d'un code informatique selon la revendication 7, **caractérisé en ce que**, ledit checking prend en considération ladite valeur aléatoire.

9. Procédé de sécurisation de l'exécution d'un code informatique selon l'une quelconque des revendications 1 à 8, **caractérisé en ce que** ledit leurre est composé de au moins une opération ayant une signature identique à celle d'une écriture dans une mémoire non volatile.

10. Procédé de sécurisation de l'exécution d'un code informatique selon l'une quelconque des revendications 1 à 8, **caractérisé en ce que** ledit leurre est composé de au moins une opération ayant une signature identique à celle d'une écriture avortée, dans une mémoire non volatile.

11. Procédé de sécurisation de l'exécution d'un code informatique selon l'une quelconque des revendications 1 à 10, **caractérisé en ce que** ledit décalage consiste en l'écriture, dans une mémoire volatile, de au moins une valeur, liée à ladite contremesure.
